(19) Europäisches Patentamt
European Patent Office
Office européen des brevets

(11) EP 0 901 753 B1

# (12) EUROPEAN PATENT SPECIFICATION

(45) Date of publication and mention of the grant of the patent:
**28.04.2004 Bulletin 2004/18**

(21) Application number: **97902579.8**

(22) Date of filing: **05.02.1997**

(51) Int Cl.[7]: **A01N 37/36**, A01N 37/34, A01N 37/38, A01N 43/40, A01N 43/76, A01N 37/46, A01N 35/10, A01N 47/36, A01N 37/48, A01N 39/02

(86) International application number:
**PCT/JP1997/000274**

(87) International publication number:
**WO 1997/028689 (14.08.1997 Gazette 1997/35)**

## (54) HERBICIDAL COMPOSITION

HERBIZIDE ZUSAMMENSETZUNG

COMPOSITION HERBICIDE

(84) Designated Contracting States:
**DE DK ES FR GB GR IT**

(30) Priority:
**09.02.1996 JP 2374796**
**01.10.1996 JP 26063396**
**01.10.1996 JP 26063496**
**01.10.1996 JP 26063596**

(43) Date of publication of application:
**17.03.1999 Bulletin 1999/11**

(73) Proprietor: **Ube Industries, Ltd.**
**Ube-shi, Yamaguchi-ken 755-0052 (JP)**

(72) Inventors:
- **AKIYOSHI, Yuji, Ube Industries, Ltd., Ube-shi, Yamaguchi 755 (JP)**
- **OKADA, Tatsuo, Ube Industries, Ltd., Ube-shi, Yamaguchi 755 (JP)**
- **KOJIMA, Mikio, Ube Industries, Ltd., Ube-shi, Yamaguchi 755 (JP)**

(74) Representative: **HOFFMANN - EITLE**
**Patent- und Rechtsanwälte**
**Arabellastrasse 4**
**81925 München (DE)**

(56) References cited:
**JP-A- 2 040 307**
**JP-A- 63 010 749**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 901 753 B1

Printed by Jouve, 75001 PARIS (FR)

## Description

Technical field

This invention relates to a herbicidal composition containing N-benzyl-2-(4-fluoro-3-trifluoromethylphenoxy) butanamide and at least one kind of a compound selected from a nitrile compound having herbicidal activity, a double phenoxy compound having controlling activity (preventing and removable activity) against gramineous weeds, a compound such as an amide compound and a cyclohexanedione compound, a sulfonylurea compound having herbicidal activity and a diphenyl ether compound having herbicidal activity as effective ingredients.

Background art

As a herbicide containing N-benzyl-2-(4-fluoro-3-tri-fluoromethylphenoxy)butanamide as an effective ingredient, those containing the compound and a urea compound (Japanese Provisional Patent Publication No. 10749/1988, corresponding to EP-A-239414), those containing a triazine compound, a phenoxy compound (Japanese Provisional Patent Publication No. 40307/1990, corresponding to EP-A-352992) as effective ingredients have been known. However, mixed effects with the nitrile compound having herbicidal activity, the double phenoxy compound having controlling activity against gramineous weeds, the compound such as an amide compound and a cyclohexanedione compound, the sulfonylurea compound having herbicidal activity and the diphenyl ether compound having herbicidal activity of the present invention have never been known.

An object of the present invention is to provide a herbicidal composition which can expect decreasing effects in an amount of N-benzyl-2-(4-fluoro-3-trifluoromethylphenoxy)butyramide to be used, chemical damage against crops, the number of spreading times, labour for spreading, costs, etc., and has an extremely wide weeds-killing spectra including hardly controlling weeds by using N-benzyl-2-(4-fluoro-3-tri-fluoromethylphenoxy)butanamide and a compound which can heighten its herbicidal effect synergistically in combination.

The present inventors have earnestly studied to solve the above-mentioned problems, and as a result, they have found that, by mixing N-benzyl-2-(4-fluoro-3-trifluoromethylphenoxy)-butanamide and at least one kind of a compound selected from a nitrile compound having herbicidal activity, a double phenoxy compound having controlling activity against gramineous weeds, a compound such as an amide compound and a cyclohexanedione compound, a sulfonylurea compound having herbicidal activity and a diphenyl ether compound having herbicidal activity, herbicidal activities of both kinds of compounds can be markedly heightened, and said compositions particularly show wide weeds-killing spectra against weeds including hardly controlling weeds such as blackgrass (*Alopecurusmyosuroides,* ALOMY), wild oat (*Avena fatua,* AVEFA) , cleavers (*Galium aparine L.,* GALAP), wild pansy (*Viola* tricolor, VIOTR), common field speedwell (*Veronica persica* Poir., VERPE), ivyleaf speedwell (*Veronica hederaefolia* L., VERHE) , common chickweed (*Stellariamedia (L.) Villars*, STEME) , etc. The herbicidal composition of the present invention show excellent effects with a less amount to be used than the case where each used singly so that decreasing effects in chemical damage against crops (particularly no chemical damage against wheat), the number of spreading times, spreading labour, costs, etc. can be expected.

Disclosure of the invention

That is, the present invention relates to a herbicidal composition which contains N-benzyl-2-(4-fluoro-3-trifluoromethylphenoxy)butyramide represented by the following formula (1) :

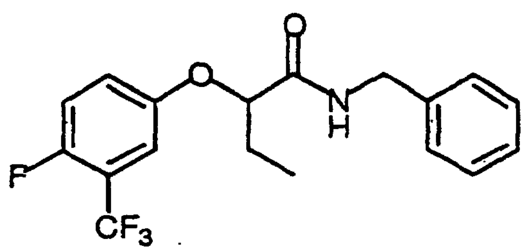

(1)

and at least one kind of a compound selected from (a) a nitrile compound having herbicidal activity, which is at least one compound selected from the group consisting of 4-hydroxy-3,5-diiodobenzonitrile, 3,5-dibromo-4-hydroxybenzonitrile and 2,6-dichlorobenzonitrile,

(b) a compound selected from a double phenoxy compound, an amide compound and a cyclohexanedione compound having controlling activity against gramineous weeds,

(c) a sulfonylurea compound having herbicidal activity represented by the following formula (2) :

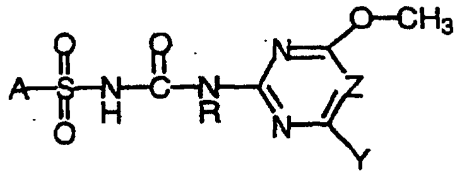

(2)

wherein R represents a hydrogen atom or a methyl group, Y represents a methyl group or a methoxy group, Z represents CH or N, and A represents the substituent shown below:

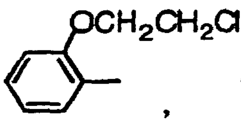 , 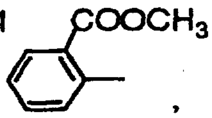 , 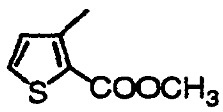 , 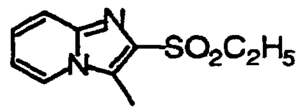

and

(d) a diphenyl ether compound having herbicidal activity represented by the following formula (3) :

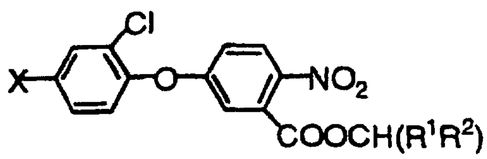

(3)

wherein $R^1$ represents a hydrogen atom or a methyl group, $R^2$ represents a hydrogen atom or an ethoxycarbonyl group, and X represents a chlorine atom or a trifluoromethyl group, as effective ingredients.

Best mode for practicing the invention

In the following, the present invention will be explained in detail.

The herbicidal composition of the present invention comprises N-benzyl-2- (4-fluoro-3-trifluoromethylphenoxy)butanamide (hereinafter referred to as Compound 1.) and at least one kind of the compound of the above-mentioned (a) to (d) as effective ingredients.

N-benzyl-2-(4-fluoro-3-trifluoromethylphenoxy)butanamide can be prepared according to the method described in Japanese Provisional Patent Publication No. 10749/1988.

The nitrile compound having herbicidal effect of the above-mentioned (a), is ioxynil (chemical name: 4-hydroxy-3,5-diiodobenzonitrile), bromoxynil (chemical name: 3,5-dibromo-4-hydroxybenzonitrile) and/or dichlobenil (chemical name: 2,6-dichlorobenzonitrile).

These compounds can be obtained as a commercially available product.

The compound having controlling activity against gramineous weeds of the above-mentioned (b), is a double phenoxy compound, an amide compound, and/or a cyclohexanedione compound.

As the double phenoxy compound, there may be mentioned, for example, a compound represented by the following formula (4) :

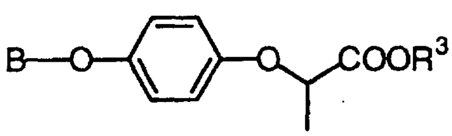

(4)

wherein $R^3$ represents a methyl group, an ethyl group or a propynyl group, and B represents the substituent shown below:

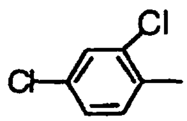 , 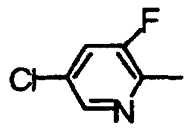 , 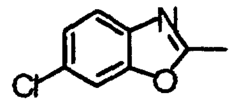

As the preferred double phenoxy compounds, there may be mentioned ethyl 2-[4-(6-chlorobenzoxazin-2-yloxy)phenoxy]-propionate (hereinafter referred to as Compound 2.), methyl (±)-2-[4-(2,4-dichlorophenoxy)phenoxy] propionate (hereinafter referred to as Compound 3.) and the like.
As the amide compound, there may be mentioned methyl 2-[N-benzoyl-N-(3-chloro-4-fluorophenyl)amino] propionate (hereinafter referred to as Compound 4.) and the like.
As the cyclohexanedione compound, there may be mentioned 2-[1-(ethoxyimino)propyl]-3-hydroxy-5-mesityl-2-cyclohexen-1-one (hereinafter referred to as Compound 5.) and the like.
These Compounds 2 to 5 can be obtained as commercially available products.
As the preferred sulfonyl urea compound (2) having herbicidal activity of the above-mentioned (c), there may be mentioned 3-(6-methoxy-4-methyl-1,3,5-triazin-2-yl)-1-[2-(2-chloroethoxy)phenylsulfonyl]urea (hereinafter referred to as Compound 6.), methyl 3-[3-(4-methoxy-6-methyl-1,3,5-triazin-2-yl)ureidosulfonyl]thiophene-2-carboxylate (hereinafter referred to as Compound 7.), methyl 2-[3-(4-methoxy-6-methyl-1,3,5-triazin-2-yl)ureidosulfonyl]benzoate (hereinafter referred to as Compound 8.) and the like.
These Compounds 6 to 8 can be obtained as commercially available products.
As the preferred diphenyl ether compound (3) having herbicidal activity of the above-mentioned (d), there may be mentioned the diphenyl ether compound (3) represented by the above formula (3); and preferably ethyl o-[5-(2-chloro-α, α, α-trifluoro-ρ-tolyloxy)-2-nitrobenzoyl]glycolate (hereinafter referred to as Compound 9.), methyl 5-(2,4-dichlorophenoxy)-2-nitrobenzoate (hereinafter referred to as Compound 10.).
These Compounds 9 and 10 can be obtained as commercially available products.
The present herbicidal composition can be used by formulating Compound 1 and at least one kind of the compounds of the above-mentioned (a) to (d) having herbicidal activity, and preparing a preparation such as a dustable powder, an emulsifiable concentrate, a fine granule, a granule, SE (Suspoemulsion), a soluble concentrate, a wettable powder, a suspension concentrate (a gel concentrate), an oil miscible flowable concentrate or an aerosol, etc.
And at the time of formulation thereof, to improve attachment of the present herbicidal composition to and absorption thereof in weeds, and to improve characteristics such as dispersion, emulsification, spreading, etc. of the chemical, there may be used a carrier, a surfactant, a dispersant, an auxiliary, or the like.
As the carrier, there may be mentioned a solid carrier, a liquid carrier, a mixture thereof, etc.
As the solid carrier, there may be mentioned mineral matter powder, solid fertilizer, vegetable matter powder, polymer compound, waxes, etc.
As the mineral matter powder, there may be mentioned talc, bentonite, clay, kaolin, diatomaceous earth, white carbon, vermiculite, montmorillonite, slaked lime, siliceous sand, etc.
As the solid fertilizer, there may be mentioned ammonium sulfate, urea, etc.
As the vegetable matter powder, there may be mentioned soy bean powder, starch, etc.
As the polymer compound, there may be mentioned a petroleum resin, polyvinyl chloride, etc.
As the liquid carrier, there may be mentioned hydrocarbons (kerosine, mineral oil, etc.), aromatic hydrocarbons (benzene, toluene, xylene, etc.), chlorinated hydrocarbons (chloroform, carbon tetrachloride, etc.), ethers (dioxane, tetrahydrofuran, etc.), ketones (acetone, cyclohexanone, isophorone, etc.), esters (ethyl acetate, ethylene glycol acetate, dibutyl maleate, etc.), alcohols (methanol, n-hexanol, ethylene glycol, etc.), polar solvents (dimethylformamide, dimethylsulfoxide, etc.), water, and the like.
As the surfactant or the dispersant, there may be mentioned nonionic type (polyoxyethylene alkyl ether, polyoxyethylene alkyl ester, polyoxyethylene sorbitan alkyl ester, etc.), anionic type (alkylbenzene sulfonate, alkylsulfosuccinate, alkylsulfate, arylsulfonate, etc.), cationic type (alkyl amines such as lauryl amine, polyoxyethylene alkyl amines, etc.), amphoteric type (carboxylic acid, sulfate, etc.), or the like.
For improving properties of the preparation, for example, xanthene gum, carboxymethyl cellulose, polyethylene glycol, gum Arabic, etc.
Moreover, depending on necessity, an insecticide, a fungicide, other kind of a herbicide, a plant growth regulator, a repellent, a fertilizer, a soil improver, etc, may be added to the present preparation so that weeds to be applied, noxious vermin to be applied, method of use, time period of use, etc. can be enlarged.
A concentration of the effective ingredients which are the sum of Compound 1 and at least one kind of the

compound of the above-mentioned (a) to (d) having herbicidal activity is 1 to 90 % by weight in a wettable powder, an emulsifiable concentrate, a liquid agent, a suspension concentrate and an oil miscible flowable concentrate, 1 to 70 % by weight in a dustable powder and a fine granule, and 1 to 75 % by weight in a granule.

A mixing ratio of the effective ingredients of the present herbicide is, based on 1 part by weight of Compound 1, 0.05 to 20 parts by weight of at least one kind of the compound of the above-mentioned (a) to (d) in the case of a wettable powder, 0.05 to 10 parts by weight in the case of an emulsifiable concentrate and 0.5 to 10 parts by weight in the case of a suspension concentrate.

Amounts of the both kinds of compounds to effectively develop their herbicidal effects may be weights of 1/10 to 1/2 based on the case where each is used alone.

Chemical dosage to be used of the sum of Compound 1 and at least one kind of the compound of the above-mentioned (a) to (d) having herbicidal activity of the present herbicidal composition may vary depending on the type of the preparation, time of use, the objective weeds and crops, weather conditions, soil conditions, etc., and preferably 100 to 5,000 g/ha.

The present herbicidal composition has a wide weeds-killing spectra including hardly controlling weeds with amounts less than the case where Compound 1 and at least one kind of the compound of the above-mentioned (a) to (d) having herbicidal activity are each used alone. It has a synergistic effect than the case where each used alone and it is sufficient with a less amount to be used so that it can be expected reducing effects such as chemical damage to crops, the number of spreading times, labour for spreading and costs to be incurred.

As wide weeds including hardly controlling weeds, there may be mentioned, for example, barnyardgrass (*Echinochloa crus-galli*, ECHCG), crabgrass (*Digitaria sanguinalis*, DIGSP), wild oat, blackgrass, annual bluegrass (Poa annua, POAAN), green foxtail (*Setaria viridis*, SETVI) , common lambsquarters (*chenopodium album,* CHEAL), livid amaranth (*Amaranthus lividus*, AMALI) , slender amaranth (*Amaranthus viridis*, AMAVI), velvetleaf (*Abutilon theophrasti*, ABUTU), tall morningglory (*Ipomoea purpurea*, *PHBPU*), *persicaria* (*Polygonum lapathifolium*, POLLN), black nightshade (*Solanum nigrum*, SOLNI), common poppy (*Papaver rhoeas*, PAPRH), wild mustard (*Sinapis arvensis*, SINAR), wild chamomile (*Matricaria chamomilla,* MATCH), cleavers, common field speedwell, ivyleaf speedwell, henbit deanettle (*Lamium amplexicaule*, LAMAM), red deanettle (*Lamium purpureum*, LAMPU), wild pansy, shepherd's-purse (*Capsella bursa-pastoris,* CAPBP), sticky mousecar (*Cerastium glomeratum*, CERGL) and common chickweed, etc.

The present herbicide has remarkable effects against these weeds, and particularly has remarkable effects against broad-leaved weeds in grain field such as wild oat, blackgrass, common chickweed, wild chamomile, cleavers, common field speedwell, ivyleaf speedwell, henbit deanettle, red deanettle, wild pansy, shepherd's-purse, etc., which means that it has an extremely high utilizable value as a herbicide.

Moreover, this herbicidal composition has a reduced chemical damage or no damage against crops, and particularly it can be used with high safety with the crops such as wheat and barley (wheat (*Triticum aestiuum,* TRZAX), barley, rye, oats, etc.), corn, etc.

Examples

In the following, the present invention will be described in detail by referring to Example but they do not intend to limit the present invention.

Example 1 (Preparation of formulation)

(1) Preparation of wettable powder

Compound 1 (20 parts by weight), ioxynil (20 parts by weight) , sodium laurylsulfate (2 parts by weight), sodium lignosulfonate (5 parts by weight) , white carbon (20 parts byweight) and kaolin (33 parts by weight) were mixed uniformly, and then pulverized to obtain a wettable powder.

(2) Preparation of wettable powder

Compound 1 (10 parts by weight), dichlobenil (25 parts by weight), sodium laurylsulfate (2 parts by weight), sodium lignosulfonate (5 parts by weight), white carbon (10 parts by weight) and kaolin (48 parts by weight) were mixed uniformly, and then pulverized to obtain a wettable powder.

(3) Preparation of emulsifiable concentrate

Compound 1 (10 parts by weight), ioxynil (10 parts by weight) and Solpol 3 685 (trade name, emulsif ier produced by Toho Kagaku Kogyo) (10 parts by weight) were dissolved in a mixture of cyclohexanone (30 parts by

weight) and phenylxynylyl ethane (40 parts by weight) uniformly to obtain an emulsifiable concentrate.

(4) Preparation of SE (Suspoemulsion)

Compound 1 (10 parts by weight) was added with naphthalene formaldehyde sulfonate sodium salt (0.5 part by weight) to water (25 parts by weight) to which silicone emulsion (0.1 part by weight) was added, and the mixture was mixed by using beads (diameter: 0.5 mm) to obtain a suspended base.

A mixture obtained by mixing Span 80 (trade name: produced by Kao K.K.) (6 parts by weight) and Tween 40 (trade name: produced by Kao K.K.) to ioxynil (10 parts by weight) under heating was added to a solution comprising PROXEL AB (trade name, produced by Zeneca Co.) (0.01 part by weight), xanthene gum (0.01 part by weight), polyvinyl alcohol (1 part by weight) and water (43.38 parts by weight), and the mixture was sufficiently stirred and emulsified by a high shear stirrer to obtain an emulsified base.

To the emulsified base was added the above-mentioned suspended base under stirring to obtain an SE.

(5) Preparation of suspension concentrate

Previously finely pulverized Compound 1 (5 parts by weight) and dichlobenil (25 parts by weight) were added to an aqueous solution (65.34 parts by weight) containing xanthene gum (0.15 part by weight), a silicone emulsion (0.5 part by weight), PROXEL AB (trade name, produced by Zeneca Co.) (0.01 part by weight), a sodium salt of maleic anhydride-diisobutyrene copolymer (2 parts by weight) and a sodium salt of naphthalene formaldehyde sulfonate (2 parts by weight), and the mixture was subjected to wet pulverizing sufficiently by using a Dyno-mil (produced by Shimnaru Enterprises Co.) with beads (diameter 0.5 mm) to obtain a suspension concentrate.

(6) Preparation of wettable powder

In the same manner as in the above (1) except for using Compound 2 (15 parts by weight) in place of ioxynil (20 parts by weight) and changing the formulating amount of kaolin to 38 parts by weight, a wettable powder was obtained.

(7) Preparation of wettable powder

In the same manner as in the above (2) except for using Compound 3 (30 parts by weight) in place of dichlobenil (25 parts by weight) and changing formulating amounts of white carbon and kaolin to 20 parts by weight and 33 parts by weight, respectively, a wettable powder was obtained.

(8) Preparation of emulsifiable concentrate

In the same manner as in the above (3) except for using Compound 4 (30 parts by weight) in place of ioxynil (10 parts by weight) and changing the solvent to a mixture of cyclohexanone (20 parts by weight) and phenylxynylyl ethane (25 parts by weight), an emulsifiable concentrate was prepared.

(9) Preparation of SE agent (Suspoemulsion agent)

A suspended base was obtained in the same manner as in the above-mentioned (4).

An emulsified base was obtained in the same manner as in the above-mentioned (4) except for using Compound 4 (8 parts by weight) in place of ioxynil (10 parts by weight) and changing the formulation amount of water to 45.38 parts by weight.

To the emulsified base was added the above-mentioned suspended base under stirring to obtain an SE agent.

(10) Preparation of suspension concentrate

Previously finely pulverized Compound 1 (10 parts by weight) and Compound 2 (8 parts by weight) were added to an aqueous solution (77.34 parts by weight) containing xanthene gum (0.15 part by weight), a silicone emulsion (0.5 part by weight), PROXEL AB (trade name, produced by Zeneca Co.) (0.01 part by weight), a sodium salt of maleic anhydride-diisobutyrene copolymer (2 parts by weight) and a sodium salt of naphthalene formaldehyde sulfonate (2 parts by weight), and the mixture was subjected to wet pulverizing sufficiently by using a Dyno-mil (produced by Shimnaru Enterprises Co.) with beads (diameter 0.5 mm) to obtain a suspension concentrate.

(11) Preparation of wettable powder

In the same manner as in the above (1) except for using Compound 6 (1 part by weight) in place of ioxynil (20 parts by weight) and changing the formulating amount of kaolin to 52 parts by weight, a wettable powder was obtained.

(12) Preparation of wettable powder

In the same manner as in the above (2) except for using Compound 7 (2 parts by weight) in place of dichlobenil (25 parts by weight) and changing formulating amounts of white carbon and kaolin to 20 parts by weight and 51 parts by weight, respectively, a wettable powder was obtained.

(13) Preparation of emulsifiable concentrate

In the same manner as in the above (3) except for using Compound 8 (1.5 parts by weight) in place of ioxynil (10 parts by weight) and changing the formulating amount of phenylxynylyl ethane to 49.5 parts by weight, an emulsifiable concentrate was prepared.

(14) Preparation of SE agent (Suspoemulsion agent)

A suspended base was obtained in the same manner as in the above-mentioned (4).
An emulsified base was obtained in the same manner as in the above-mentioned (4) except for using Compound 7 (2 parts by weight) in place of ioxynil (10 parts by weight) and changing the formulation amount of water to 51.38 parts by weight.
To the emulsified base was added the above-mentioned suspended base under stirring to obtain an SE agent.

(15) Preparation of suspension concentrate

Previously finely pulverized Compound 1 (10 parts by weight) and Compound 6 (1 part by weight) were added to an aqueous solution (84.34 parts by weight) containing xanthene gum (0.15 part by weight), a silicone emulsion (0.5 part by weight), PROXEL AB (trade name, produced by Zeneca Co.) (0.01 part by weight), a sodium salt of maleic anhydride-diisobutyrene copolymer (2 parts by weight) and a sodium salt of naphthalene formaldehyde sulfonate (2 parts by weight), and the mixture was subjected to wet pulverizing sufficiently by using a Dyno-mil (produced by Shimnaru Enterprises Co.) with beads (diameter 0.5 mm) to obtain a suspension concentrate.

(16) Preparation of wettable powder

In the same manner as in the above (1) except for using Compound 9 (2 parts by weight) in place of ioxynil (20 parts by weight) and changing the formulating amount of kaolin to 51 parts by weight, a wettable powder was obtained.

(17) Preparation of wettable powder

In the same manner as in the above (2) except for using Compound 10 (35 parts by weight) in place of dichlobenil (25 parts by weight) and changing formulating amounts of white carbon and kaolin to 20 parts by weight and 28 parts by weight, respectively, a wettable powder was obtained.

(18) Preparation of emulsifiable concentrate

In the same manner as in the above (3) except for using Compound 9 (1 part by weight) in place of ioxynil (10 parts by weight) and changing the formulating amount of phenylxynylyl ethane to 49 parts by weight, an emulsifiable concentrate was prepared.

(19) Preparation of SE agent (Suspoemulsion agent)

A suspended base was obtained in the same manner as in the above-mentioned (4).
An emulsified base was obtained in the same manner as in the above-mentioned (4) except for using Compound 9 (1 part by weight) in place of ioxynil (10 parts by weight) and changing the formulation amount of water to

52.38 parts by weight.
To the emulsified base was added the above-mentioned suspended base under stirring to obtain an SE agent.

(20) Preparation of suspension concentrate

Previously finely pulverized Compound 1 (10 parts by weight) and Compound 10 (35 parts by weight) were added to an aqueous solution (50.34 parts by weight) containing xanthene gum (0. 15 part by weight), a silicone emulsion (0.5 part by weight), PROXEL AB (trade name, produced by Zeneca Co.) (0.01 part by weight), a sodium salt of maleic anhydride-diisobutyrene copolymer (2 parts by weight) and a sodium salt of naphthalene formaldehyde sulfonate (2 parts by weight), and the mixture was subjected to wet pulverizing sufficiently by using a Dyno-mil (produced by Shimnaru Enterprises Co.) with beads (diameter 0.5 mm) to obtain a suspension concentrate.

Example 2 (Effect test)

(1) Soil treatment test before germination of weeds

Wagner pots, each having an area of 1/5000 are, were packed with field soil (sandy loam), and each seed of plants (wheat, blackgrass, chickweed, matricaria, violet, henbit, persian speedwell or bedstraw) was planted.
At the next day from the sowing, a wettable powder prepared according to Example 1 (2) was uniformly applied to the surface of the pot soil so as to have a predetermined chemical dose by using a pressure sprayer. And the seeds were grown in a non-heating glass house (0 to 18 °C), and the herbicidal activity was examined after 5 weeks.
The herbicidal activity was calculated by the following equation by weighing the weight of a living body on the ground of the plant applied to the test remained at the time of examination.

$$\text{Inhibiting ratio (\%)} = \left\{ 1 - \frac{\text{Living body weight on the ground portion of the treated district}}{\text{Living body weight on the ground portion of the non-treated district}} \right\} \times 100$$

The results are shown in Table 1.
Incidentally, the value in the parentheses of the table shows an expected value of an arithmetic effect. And the value was obtained by the equation of Colby (Colby. S.R.; Weed, vol. 15, pages 20-22, 1967) shown below.

$$\text{Expected value of arithmetic effect (\%)} = X + \left( Y - \frac{XY}{100} \right)$$

wherein X represents an inhibiting ratio (%) when the herbicide A is treated with a chemical dose of a g/ha; and Y represents an inhibiting ratio (%) when the herbicide B is treated with a chemical dose of a b g/ha.

Table 1 Herbicidal effect by soil treatment before germination of weeds

| Compound | Chemical dose (g/ha) | Wheat | Blackgrass | Common chickweed | Wild chamomile | Wild pansy | Henbit deanettle | Cleavers | Common field speedwell |
|---|---|---|---|---|---|---|---|---|---|
| (Note) Compound 1 | 200 | 0 | 42 | 78 | 23 | 99 | 99 | 77 | 96 |
| (Note) Compound 1 | 100 | 0 | 18 | 55 | 9 | 93 | 95 | 58 | 93 |
| Dichlobenil | 500 | 0 | 25 | 60 | 72 | 46 | 65 | 25 | 55 |
| Compound 1<br>Dichlobenil | 200<br>500 | 0 | 86 (57) | 100 (91) | 100 (78) | 100 (99) | 100 (100) | 98 (83) | 100 (98) |
| Compound 1<br>Dichlobenil | 100<br>500 | 0 | 75 (39) | 98 (82) | 95 (75) | 100 (96) | 100 (98) | 88 (69) | 100 (97) |

(Note) N-benzyl-2-(4-fluoro-3-trifluoromethylphenoxy)butyramide was shown as Compound 1.

(2) Foliar treatment test at the growing period of weeds

Wagner pots, each having an area of 1/5000 are, were packed with field soil (sandy loam), and then each seed of plants with the kinds shown in the above-mentioned (1) was planted and grown.

At the 2 to 3 leaf stage of wheat and 3 to 5 leaf stage of weeds, wettable powders prepared according to Example 1 (2), (7), (12) and (17) were each uniformly applied to the surface of the pot soil so as to have a predetermined chemical dose by using a pressure sprayer. And the seeds were grown in a non-heating glass house (0 to 18 °C), and the herbicidal activity was examined after 5 weeks.

The results are shown in Table 2.

Table 2 Herbicidal effect by foilar treatment at growing period of weeds

| Compound | Chemical dose (g/ha) | Wheat | Blackgrass | Common chickweed | Wild chamomile | Wild pansy | Henbit deanettle | Cleavers | Common field speedwell |
|---|---|---|---|---|---|---|---|---|---|
| (Note) Compound 1 | 200 | 0 | 20 | 56 | 37 | 98 | 96 | 85 | 95 |
| | 100 | 0 | 7 | 35 | 25 | 95 | 93 | 71 | 90 |
| Ioxynil | 200 | 0 | 15 | 50 | 88 | 40 | 47 | 35 | 38 |
| Compound 1<br>Ioxynil | 200<br>200 | 0 | 55 (32) | 100 (78) | 100 (92) | 100 (99) | 100 (98) | 100 (90) | 100 (97) |
| Compound 1<br>Ioxynil | 100<br>200 | 0 | 36 (21) | 93 (53) | 100 (91) | 100 (97) | 100 (96) | 100 (81) | 100 (94) |

(Note) N-benzyl-2-(4-fluoro-3-trifluoromethylphenoxy)butyramide was shown as Compound 1.

Table 2 (contd)

| Compound | Chemical dose (g/ha) | Crops | Weeds | | | | | | |
|---|---|---|---|---|---|---|---|---|---|
| | | Wheat | Blackgrass | Common chickweed | Wild chamomile | Wild pansy | Henbit deanettle | Cleavers | Common field speedwell |
| Note 1) Compound 1 | 200 | 0 | 5 | 55 | 38 | 100 | 95 | 95 | 95 |
| | 100 | 0 | 2 | 28 | 10 | 98 | 89 | 77 | 88 |
| Note 2) Compound 2 | 50 | 0 | 80 | 0 | 0 | 0 | 0 | 0 | 0 |
| Compound 1 | 200 | 0 | 98 (81) | 65 (55) | 48 (38) | 100 (100) | 100 (95) | 96 (95) | 96 (95) |
| Compound 2 | 50 | | | | | | | | |
| Compound 1 | 100 | 0 | 95 (80.4) | 50 (28) | 20 (20) | 100 (98) | 95 (89) | 80 (77) | 90 (88) |
| Compound 2 | 50 | | | | | | | | |
| Note 3) Compound 4 | 500 | 0 | 80 | 0 | 0 | 0 | 0 | 0 | 0 |
| Compound 1 | 200 | 0 | 95 (81.0) | 80 (55) | 48 (38) | 100 (100) | 100 (95) | 100 (95) | 98 (95) |
| Compound 4 | 500 | | | | | | | | |
| Compound 1 | 100 | 0 | 95 (80.4) | 67 (28) | 30 (20) | 100 (98) | 95 (89) | 92 (77) | 90 (88) |
| Compound 4 | 500 | | | | | | | | |

Table 2 (contd)

| Compound | Chemical dose (g/ha) | Crops | Weeds | | | | | | |
|---|---|---|---|---|---|---|---|---|---|
| | | Wheat | Blackgrass | Common chickweed | Wild chamomile | Wild pansy | Henbit deanettle | Cleavers | Common field speedwell |
| Note 1) Compound 1 | 200 | 0 | 15 | 45 | 40 | 100 | 98 | 93 | 95 |
| | 100 | 0 | 6 | 20 | 24 | 98 | 98 | 75 | 87 |
| Note 4) Compound 6 | 5 | 0 | 3 | 92 | 89 | 85 | 82 | 64 | 28 |
| Compound 1<br>Compound 6 | 200<br>5 | 0 | 20<br>(17.6) | 98<br>(95.6) | 95<br>(93.4) | 100<br>(100) | 100<br>(99.6) | 98<br>(97.5) | 98<br>(96.0) |
| Compound 1<br>Compound 6 | 100<br>5 | 0 | 18<br>(8.8) | 96<br>(93.6) | 91<br>(91.6) | 100<br>(99.7) | 100<br>(99.6) | 92<br>(91.0) | 91<br>(90.6) |
| Note 5) Compound 7 | 25 | 0 | 15 | 89 | 85 | 65 | 63 | 80 | 60 |
| Compound 1<br>Compound 7 | 200<br>25 | 0 | 35<br>(27.8) | 97<br>(94.0) | 100<br>(91.0) | 100<br>(100) | 100<br>(99.3) | 99<br>(98.6) | 98<br>(98.0) |
| Compound 1<br>Compound 7 | 100<br>25 | 0 | 30<br>(20.1) | 95<br>(91.2) | 97<br>(88.6) | 100<br>(99.3) | 100<br>(99.3) | 95<br>(95.0) | 98<br>(94.8) |

Table 2 (contd)

| Compound | Chemical dose (g/ha) | Crops | Weeds | | | | | | |
|---|---|---|---|---|---|---|---|---|---|
| | | Wheat | Blackgrass | Common chickweed | Wild chamomile | Wild pansy | Henbit deanettle | Cleavers | Common field speedwell |
| Note 1) Compound 1 | 200 | 0 | 5 | 45 | 40 | 100 | 98 | 93 | 95 |
| | 100 | 0 | 2 | 20 | 13 | 98 | 95 | 70 | 87 |
| Note 6) Compound 9 | 10 | 0 | 0 | 8 | 44 | 43 | 85 | 73 | 88 |
| Compound 1<br>Compound 9 | 200<br>10 | 0 | 5<br>(5) | 65<br>(49.4) | 93<br>(66.4) | 100<br>(100) | 100<br>(99.7) | 100<br>(98.1) | 100<br>(99.4) |
| Compound 1<br>Compound 9 | 100<br>10 | 0 | 2<br>(2) | 55<br>(26.4) | 92<br>(51.3) | 100<br>(98.9) | 100<br>(99.3) | 100<br>(91.9) | 100<br>(98.4) |
| Note 7) Compound 10 | 500 | 0 | 0 | 20 | 31 | 85 | 95 | 71 | 97 |
| Compound 1<br>Compound 10 | 200<br>500 | 0 | 5<br>(5) | 72<br>(56.0) | 79<br>(49.0) | 100<br>(100) | 100<br>(99.9) | 100<br>(98.0) | 100<br>(99.9) |
| Compound 1<br>Compound 10 | 100<br>500 | 0 | 2<br>(2) | 58<br>(36.0) | 65<br>(40.0) | 100<br>(99.7) | 100<br>(99.8) | 96<br>(91.3) | 100<br>(99.6) |

Note 1) Compound 1: N-benzyl-2-(4-fluoro-3-trifluoromethylphenoxy)butanamide

Note 2) Compound 2: Ethyl 2-[4-(6-chlorobenzoxazin-2-yloxy)-phenoxy]propionate

Note 3) Compound 4: Methyl (±)-2-[4-(2,4-dichlorophenoxy)-phenoxy]propionate

Note 4) Compound 6: 3-(6-Methoxy-4-methyl-1,3,5-triazin-2-yl)-1-[2-(2-chloroethoxy)phenylsulfonyl]urea

Note 5) Compound 7: Methyl 3-[3-(4-methoxy-6-methyl-1,3,5-triazin-2-yl)ureidosulfonyl]thiophene-2-carboxylate

Note 6) Compound 9: ethyl o-[5-(2-chloro-α, α, α-trifluoro-p-tolyloxy)-2-nitrobenzoyl]glycolate

Note 7) Compound 10: Methyl 5-(2,4-dichlorophenoxy)-2-nitrobenzoate

As clearly seen from the above-mentioned results described in Table 1 and Table 2, it can be confirmed that the herbicidal composition of the present invention shows excellent synergistic effect than the expecting arithmetical effect.

Utilizability in industry

The herbicidal composition of the present invention is heightened in herbicidal effect of the both kinds of compounds synergistically by containing N-benzyl-2-(4-fluoro-3-trifluoromethylphenoxy)butanamide, and at least one compound selected from a nitrile compound having herbicidal activity, a compound having controlling activity against gramineous weeds, a sulfonylurea compound and a diphenyl ether compound as active ingredients, and reducing effects in an amount of N-benzyl-2-(4-fluoro-3-trifluoromethylphenoxy)butanamide to be used, chemical damages against crops, the number of spreading times, labor of spreading, costs, etc. can be expected.

## Claims

**1.** A herbicidal composition which contains N-benzyl-2-(4-fluoro-3-trifluoromethylphenoxy)-butanamide represented by the following formula (1) :

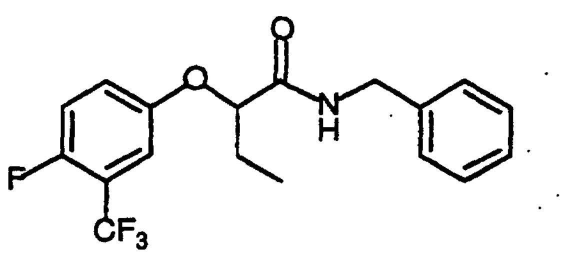

(1)

and at least one kind of a compound selected from

(a) a nitrile compound having herbicidal activity, which is at least one compound selected from the group consisting of 4-hydroxy-3,5-diiodobenzonitrile, 3,5-dibromo-4-hydroxybenzonitrile and 2,6-dichlorobenzonitrile,
(b) a compound selected from a double phenoxy compound, an amide compound and a cyclohexanedione compound having controlling activity against gramineous weeds,
(c) a sulfonylurea compound having herbicidal activity represented by the following formula (2):

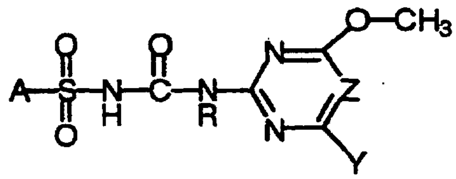
(2)

wherein R represents a hydrogen atom or a methyl group, Y represents a methyl group or a methoxy group, Z represents CH or N, and A represents the substituent shown below:

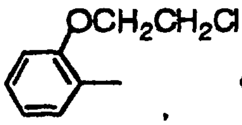 , 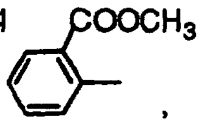 , 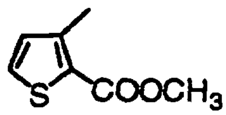 , 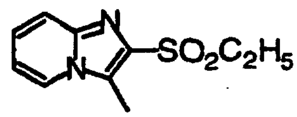

and
(d) a diphenyl ether compound having herbicidal activity represented by the following formula (3):

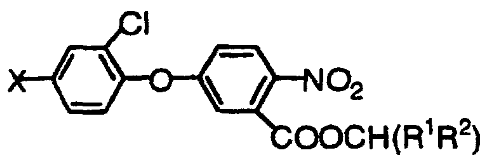
(3)

wherein $R^1$ represents a hydrogen atom or a methyl group, $R^2$ represents a hydrogen atom or an ethoxycarbonyl group, and X represents a chlorine atom or a trifluoromethyl group,
as effective ingredients.

**2.** The herbicidal composition according to Claim 1, wherein the composition contains N-benzyl-2-(4-fluoro-3-trifluoromethylphenoxy)butanamide and 4-hydroxy-3,5-diiodobenzonitrile as effective ingredients.

**3.** The herbicidal composition according to Claim 1, wherein the composition contains N-benzyl-2-(4-fluoro-3-trifluoromethylphenoxy)butanamide and 2,6-dichlorobenzonitrile as effective ingredients.

**4.** The herbicidal composition according to Claim 1, wherein (b) the double phenoxy compound is represented by the following formula (4) :

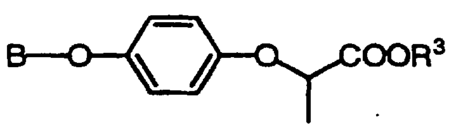
(4)

wherein $R^3$ represents a methyl group, an ethyl group or a propynyl group, and B represents the substituent shown below:

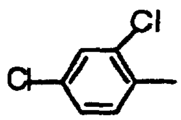 , 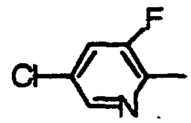 , 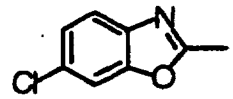 .

**5.** The herbicidal composition according to Claim 1, wherein (b) the double phenoxy compound is ethyl 2-[4-(6-chlorobenzoxazin-2-yloxy)phenoxy]propionate or methyl (±)-2-[4-(2,4-dichlorophenoxy)phenoxy]propionate.

**6.** The herbicidal composition according to Claim 1, wherein the composition contains N-benzyl-2-(4-fluoro-3-trifluoromethylphenoxy)butanamide and ethyl 2-[4-(6-chlorobenzoxazin-2-yloxy)phenoxy]propionate as effective ingredients.

**7.** The herbicidal composition according to Claim 1, wherein the composition contains N-benzyl-2-(4-fluoro-3-trifluoromethylphenoxy)butanamide and methyl (±)-2-[4-(2,4-dichlorophenoxy)phenoxy]propionate as effective ingredients.

**8.** The herbicidal composition according to Claim 1, wherein (b) the amide compound is methyl 2-[N-benzoyl-N-(3-chloro-4-fluorophenyl)amino]propionate.

**9.** The herbicidal composition according to Claim 1, wherein the composition contains N-benzyl-2-(4-fluoro-3-trifluoromethylphenoxy)butanamide and methyl 2-[N-benzoyl-N-(3-chloro-4-fluorophenyl)amino]propionate as effective ingredients.

**10.** The herbicidal composition according to Claim 1, wherein (b) the cyclohexanedione compound is 2-[1-(ethoxyimino)-propyl]-3-hydroxy-5-mesityl-2-cyclohexen-1-one.

**11.** The herbicidal composition according to Claim 1, wherein the composition contains N-benzyl-2-(4-fluoro-3-trifluoromethylphenoxy)butanamide and 2-[1-(ethoxyimino)propyl]-3-hydroxy-5-mesityl-2-cyclohexen-1-one as effective ingredients.

**12.** The herbicidal composition according to Claim 1, wherein (c) the sulfonyl urea compound is at least one compound selected from the group consisting of 3-(6-methoxy-4-methyl-1,3,5-triazin-2-yl)-1-[2-(2-chloroethoxy)phenylsulfonyl]urea, methyl 3-[3-(4-methoxy-6-methyl-1,3,5-triazin-2-yl)-ureidosulfonyl]thiophene-2-carboxylate and methyl 2-[3-(4-methoxy-6-methyl-1,3,5-triazin-2-yl)ureidosulfonyl]benzoate.

**13.** The herbicidal composition according to Claim 1, wherein the composition contains N-benzyl-2-(4-fluoro-3-trifluoromethylphenoxy)butanamide and 3-(6-methoxy-4-methyl-1,3,5-triazin-2-yl)-1-(2-(2-chloroethoxy)phenylsulfonyl] urea as effective ingredients.

**14.** The herbicidal composition according to Claim 1, wherein the composition contains N-benzyl-2-(4-fluoro-3-trifluoromethylphenoxy)butanamide and methyl 3-[3-(4-methoxy-6-methyl-1,3,5-triazin-2-yl)ureidosulfonyl]thiophene-2-carboxylate as effective ingredients.

**15.** The herbicidal composition according to Claim 1, wherein the composition contains N-benzyl-2-(4-fluoro-3-trifluoromethylphenoxy)butanamide and methyl 2-[3-(4-methoxy-6-methyl-1,3,5-triazin-2-yl)ureidosulfonyl)benzoate as effective ingredients.

**16.** The herbicidal composition according to Claim 1, wherein (d) the diphenyl ether compound is at least one compound selected from the group consisting of ethyl o-[5-(2-chloro-α, α, α-trifluoro-p-tolyloxy)-2-nitrobenzoyl]glycolate and methyl 5-(2,4-dichlorophenoxyl-2-nitrobenzoate.

**17.** The herbicidal composition according to Claim 1, wherein the composition contains N-benzyl-2-(4-fluoro-3-trifluoromethylphenoxy)butanamide and ethyl o-[5-(2-chloro-α, α, α-trifluoro-p-tolyloxy)-2-nitrobenzoyl]glycolate as effective ingredients.

**18.** The herbicidal composition according to Claim 1, wherein the composition contains N-benzyl-2-(4-fluoro-3-trifluoromethylphenoxy)butanamide and methyl 5-(2,4-dichlorophenoxy)-2-nitrobenzoate as effective ingredients.

## Patentansprüche

1. Herbizidzusammensetzung, welche N-Benzyl-2-(4-fluor-3-trifluormethylphenoxy)butanamid, das durch die nachstehende Formel (1) wiedergegeben wird:

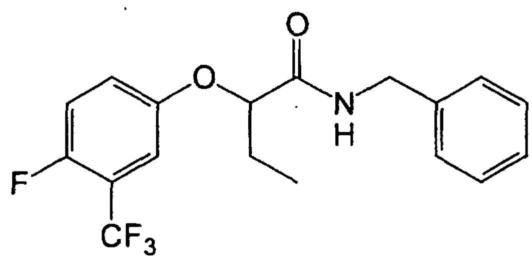

(1)

und mindestens eine Art einer Verbindung, ausgewählt aus:

(a) einer Nitrilverbindung mit Herbizidaktivität, welche mindestens eine Verbindung ist, ausgewählt aus der Gruppe aus 4-Hydroxy-3,5-diiodbenzonitril, 3,5-Dibrom-4-hydroxybenzonitril und 2,6-Dichlorbenzonitril,

(b) einer Verbindung, ausgewählt aus einer doppelten Phenoxyverbindung, einer Amidverbindung und einer Cyclohexandionverbindung mit Kontrollaktivität gegen grasartiges Unkraut,

(c) einer Sulfonylharnstoffverbindung mit Herbizidaktivität, die durch die folgende Formel (2) wiedergegeben wird:

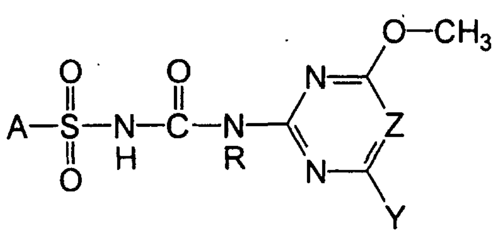

(2)

worin R ein Wasserstoffatom oder eine Methylgruppe bedeutet, Y eine Methylgruppe oder eine Methoxygruppe bedeutet, Z CH oder N bedeutet und A für den nachstehend gezeigten Substituenten steht:

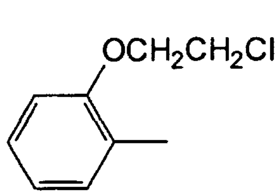 , 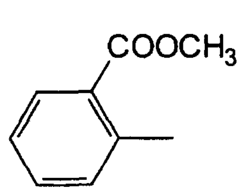 , 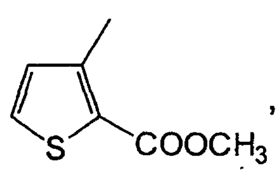 ,

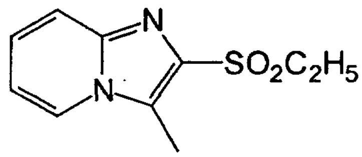

und

(d) einer Diphenyletherverbindung mit Herbizidaktivität, die durch die folgende Formel (3) wiedergegeben wird:

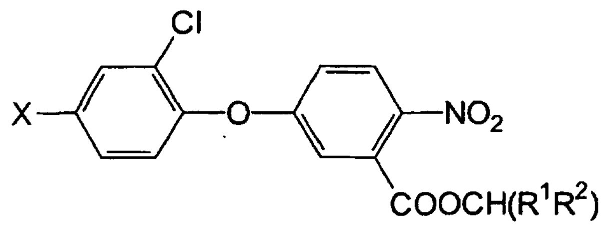

(3)

worin $R^1$ ein Wasserstoffatom oder eine Methylgruppe bedeutet, $R^2$ ein Wasserstoffatom oder eine Ethoxycarbonylgruppe bedeutet und X ein Chloratom oder eine Trifluormethylgruppe bedeutet, als Wirkstoffe enthält.

**2.** Herbizidzusammensetzung gemäss Anspruch 1, wobei die Zusammensetzung N-Benzyl-2-(4-fluor-3-trifluormethylphenoxy)butanamid und 4-Hydroxy-3,5-diiodbenzonitril als Wirkstoffe enthält.

**3.** Herbizidzusammensetzung gemäss Anspruch 1, wobei die Zusammensetzung N-Benzyl-2-(4-fluor-3-trifluormethylphenoxy)butanamid und 2,6-Dichlorbenzonitril als Wirkstoffe enthält.

**4.** Herbizidzusammensetzung gemäss Anspruch 1, wobei (b) die doppelte Phenoxyverbindung durch die nachstehende Formel (4) wiedergegeben wird:

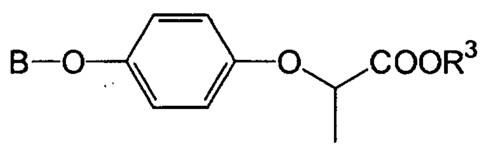

(4)

worin $R^3$ eine Methylgruppe, eine Ethylgruppe oder eine Propinylgruppe bedeutet und B für den nachstehend gezeigten Substituenten steht:

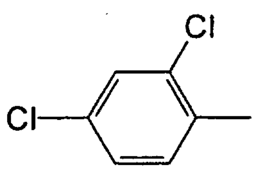 , 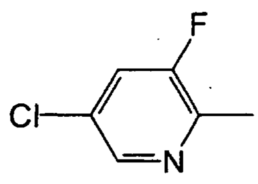 , 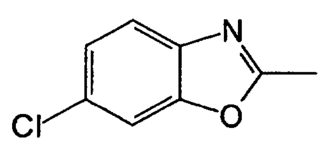 .

**5.** Herbizidzusammensetzung gemäss Anspruch 1, wobei (b) die doppelte Phenoxyverbindung Ethyl-2-[4-(6-chlorbenzoxazin-2-yloxy)phenoxy]propionat oder Methyl-(±)-2-[4-(2,4-dichlorphenoxy)phenoxy]propionat ist.

**6.** Herbizidzusammensetzung gemäss Anspruch 1, wobei die Zusammensetzung N-Benzyl-2-(4-fluor-3-trifluormethylphenoxy)butanamid und Ethyl-2-[4-(6-chlorbenzoxazin-2-yloxy)phenoxy]propionat als Wirkstoffe enthält.

**7.** Herbizidzusammensetzung gemäss Anspruch 1, wobei die Zusammensetzung N-Benzyl-2-(4-fluor-3-trifluormethylphenoxy)butanamid und Methyl-(±)-2-[4-(2,4-dichlorphenoxy)phenoxy]propionat als Wirkstoffe enthält.

**8.** Herbizidzusammensetzung gemäss Anspruch 1, wobei (b) die Amidverbindung Methyl-2-[N-benzoyl-N-(3-chlor-4-fluorphenyl)amino]propionat ist.

**9.** Herbizidzusammensetzung gemäss Anspruch 1, wobei die Zusammensetzung N-Benzyl-2-(4-fluor-3-trifluormethylphenoxy)butanamid und Methyl-2-[Nbenzoyl-N-(3-chlor-4-fluorphenyl)amino]propionat als Wirkstoffe enthält.

**10.** Herbizidzusammensetzung gemäss Anspruch 1, wobei (b) die Cyclohexandionverbindung 2-[1-(Ethoxyimino)propyl]-3-hydroxy-5-mesityl-2-cyclohexen-1-on ist.

**11.** Herbizidzusammensetzung gemäss Anspruch 1, wobei die Zusammensetzung N-Benzyl-2-(4-fluor-3-trifluormethylphenoxy)butanamid und 2-[1-(Ethoxyimino)propyl]-3-hydroxy-5-mesityl-2-cyclohexen-1-on als Wirkstoffe enthält.

**12.** Herbizidzusammensetzung gemäss Anspruch 1, wobei (c) die Sulfonylharnstoffverbindung mindestens eine Verbindung ist, ausgewählt aus der Gruppe aus 3-(6-Methoxy-4-methyl-1,3,5-triazin-2-yl)-1-[2-(2-chlorethoxy)phenylsulfonyl]harnstoff, Methyl-3-[3-(4-methoxy-6-methyl-1,3,5-triazin-2-yl)-ureidosulfonyl]-thiophen-2-carboxylat und Methyl-2-[3-(4-methoxy-6-methyl-1,3,5-triazin-2-yl)ureidosulfonyl]benzoat.

**13.** Herbizidzusammensetzung gemäss Anspruch 1, wobei die Zusammensetzung N-Benzyl-2-(4-fluor-3-trifluormethylphenoxy)butanamid und 3-(6-Methoxy-4-methyl-1,3,5-triazin-2-yl)-1-[2-(2-chlorethoxy)-phenylsulfonyl]harnstoff als Wirkstoffe enthält.

**14.** Herbizidzusammensetzung gemäss Anspruch 1, wobei die Zusammensetzung N-Benzyl-2-(4-fluor-3-trifluormethylphenoxy)butanamid und Methyl-3-[3-(4-methoxy-6-methyl-1,3,5-triazin-2-yl)ureidosulfonyl]-thiophen-2-carboxylat als Wirkstoffe enthält.

**15.** Herbizidzusammensetzung gemäss Anspruch 1, wobei die Zusammensetzung N-Benzyl-2-(4-fluor-3-trifluormethylphenoxy)butanamid und Methyl-2-[3-(4-methoxy-6-methyl-1,3,5-triazin-2-yl)ureidosulfonyl]-benzoat als Wirkstoffe enthält.

**16.** Herbizidzusammensetzung gemäss Anspruch 1, wobei (d) die Diphenyletherverbindung mindestens eine Verbindung ist, ausgewählt aus der Gruppe aus Ethyl-o-[5-(2-Chlor-α,α,α-trifluor-p-tolyloxy)-2-nitrobenzoyl]glykolat und Methyl-5-(2,4-dichlorphenoxy)-2-nitrobenzoat.

**17.** Herbizidzusammensetzung gemäss Anspruch 1, wobei die Zusammensetzung N-Benzyl-2-(4-fluor-3-trifluormethylphenoxy)butanamid und Ethyl-o-[5-(2-chlor-α,α,α-trifluor-p-tolyloxy)-2-nitrobenzoyl]-glykolat als Wirkstoffe enthält.

**18.** Herbizidzusammensetzung gemäss Anspruch 1, wobei die Zusammensetzung N-Benzyl-2-(4-fluor-3-trifluormethylphenoxy)butanamid und Methyl-5-(2,4-dichlorphenoxy)-2-nitrobenzoat als Wirkstoffe enthält.

## Revendications

**1.** Composition herbicide qui contient du N-benzyl-2-(4-fluoro-3-trifluorométhylphénoxy)-butanamide représenté par la formule (1) suivante :

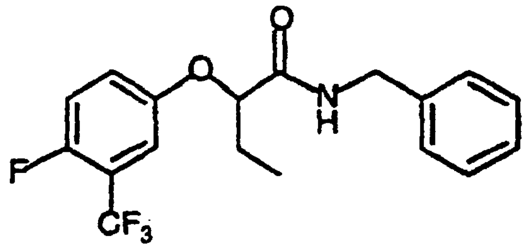

(1)

et au moins un type d'un composé choisi parmi

(a) un composé nitrile possédant une activité herbicide, qui est au moins un composé choisi dans le groupe constitué par le 4-hydroxy-3,5-diiodobenzonitrile, le 3,5-dibromo-4-hydroxybenzonitrile et le 2,6-dichlorobenzonitrile,
(b) un composé choisi parmi un composé à deux groupes phénoxy, un composé amide et un composé cyclohexanedione ayant une activité de lutte contre les mauvaises herbes graminées,
(c) un composé sulfonylurée possédant une activité herbicide représenté par la formule (2) suivante :

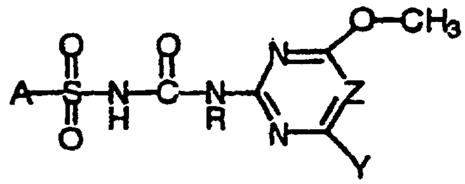

(2)

dans laquelle R représente un atome d'hydrogène ou un groupe méthyle, Y représente un groupe méthyle ou un groupe méthoxy, Z représente CH ou N, et A représente le substituant représenté ci-dessous :

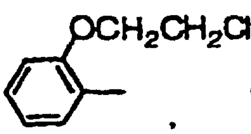 , 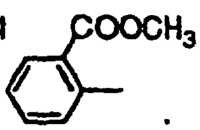 , 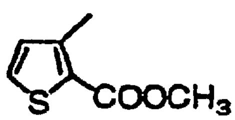 , 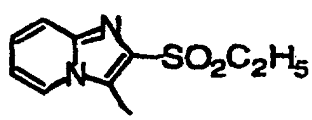

et
(d) un composé diphényléther possédant une activité herbicide représenté par la formule (3) suivante :

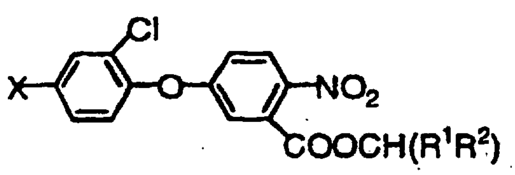

(3)

dans laquelle $R^1$ représente un atome d'hydrogène ou un groupe méthyle, $R^2$ représente un atome d'hydrogène ou un groupe éthoxycarbonyle, et X représente un atome de chlore ou un groupe trifluorométhyle, en tant qu'ingrédients efficaces.

2. Composition herbicide selon la revendication 1, dans laquelle la composition contient du N-benzyl-2-(4-fluoro-3-trifluorométhylphénoxy)butanamide et du 4-hydroxy-3,5-diiodobenzonitrile en tant qu'ingrédients efficaces.

3. Composition herbicide selon la revendication 1, dans laquelle la composition contient du N-benzyl-2-(4-fluoro-3-trifluorométhylphénoxy)butanamide et du 2,6-dichlorobenzonitrile en tant qu'ingrédients efficaces.

**4.** Composition herbicide selon la revendication 1, dans laquelle (b) le composé à deux groupes phénoxy est représenté par la formule (4) suivante :

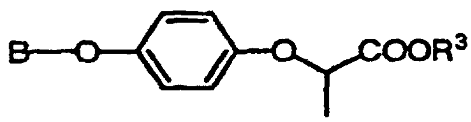

(4)

dans laquelle $R^3$ représente un groupe méthyle, un groupe éthyle ou un groupe propynyle, et B représente le substituant représenté ci-dessous :

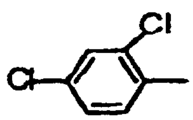 , 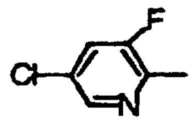 , 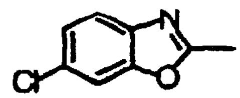

**5.** Composition herbicide selon la revendication 1, dans laquelle (b) le composé à deux groupes phénoxy est le 2-[4-(6-chlorobenzoxazin-2-yloxy)phénoxy]propionate d'éthyle ou le (±)-2-[4-(2,4-dichlorophénoxy)phénoxy)-propionate de méthyle.

**6.** Composition herbicide selon la revendication 1, dans laquelle la composition contient du N-benzyl-2-(4-fluoro-3-trifluorométhylphénoxy)butanamide et du 2-[4-(6-chlorobenzoxazin-2-yloxy)phénoxy]propionate d'éthyle en tant qu'ingrédients efficaces.

**7.** Composition herbicide selon la revendication 1, dans laquelle la composition contient du N-benzyl-2-(4-fluoro-3-trifluorométhylphénoxy)butanamide et du (±)-2-[4-(2,4-dichlorophénoxy)phénoxy]-propionate de méthyle en tant qu'ingrédients efficaces.

**8.** Composition herbicide selon la revendication 1, dans laquelle (b) le composé amide est le 2-[N-benzoyl-N-(3-chloro-4-fluorophényl)amino]propionate de méthyle.

**9.** Composition herbicide selon la revendication 1, dans laquelle la composition contient du N-benzyl-2-(4-fluoro-3-trifluorométhylphénoxy)butanamide et du 2-[N-benzoyl-N-{3-chloro-4-fluorophényl)amino]propionate de méthyle en tant qu'ingrédients efficaces.

**10.** Composition herbicide selon la revendication 1, dans laquelle (b) le composé cyclohexanedione est la 2-[1-(éthoxyimino)propyl]-3-hydroxy-5-mésityl-2-cyclohexén-1-one.

**11.** Composition herbicide selon la revendication 1, dans laquelle la composition contient du N-benzyl-2-(4-fluoro-3-trifluorométhylphénoxy)butanamide et de la 2-[1-(éthoxyimino)propyl]-3-hydroxy-5-mésityl-2-cyclohexén-1-one en tant qu'ingrédients efficaces.

**12.** Composition herbicide selon la revendication 1, dans laquelle (c) le composé sulfonylurée est au moins un composé choisi dans le groupe constitué par la 3-(6-méthoxy-4-méthyl-1,3,5-triazin-2-yl)-1-[2-(2-chloroéthoxy)phénylsulfonyl]urée, le 3-[3-(4-méthoxy-6-méthyl-1,3,5-triazin-2-yl)-uréidosulfonyl]thiophène-2-carboxylate de méthyle et le 2-[3-(4-méthoxy-6-méthyl-1,3,5-triazin-2-yl)uréidosulfonyl]benzoate de méthyle.

**13.** Composition herbicide selon la revendication 1, dans laquelle la composition contient du N-benzyl-2-(4-fluoro-3-trifluorométhylphénoxy)butanamide et de la 3-(6-méthoxy-4-méthyl-1,3,5-triazin-2-yl)-1-[2-(2-chloroéthoxy)phénylsulfonyl]urée en tant qu'ingrédients efficaces.

**14.** Composition herbicide selon la revendication 1, dans laquelle la composition contient du N-benzyl-2-(4-fluoro-3-trifluorométhylphénoxy)butanamide et du 3-[3-(4-méthoxy-6-méthyl-1,3,5-triazin-2-yl)-uréidosulfonyl]-thiophène-2-carboxylate de méthyle en tant qu'ingrédients efficaces.

**15.** Composition herbicide selon la revendication 1, dans laquelle la composition contient du N-benzyl-2-(4-fluoro-3-trifluorométhylphénoxy)butanamide et du 2-[3-(4-méthoxy-6-méthyl-1,3,5-triazin-2-yl)uréidosulfonyl]-benzoate de méthyle en tant qu'ingrédients efficaces.

**16.** Composition herbicide selon la revendication 1, dans laquelle (d) le composé diphényléther est au moins un composé choisi dans le groupe constitué par le o-[5-(2-chloro-α,α,α-trifluoro-p-tolyloxy)-2-nitrobenzoyl]glycolate d'éthyle et le 5-(2,4-dichlorophénoxy)-2-nitrobenzoate de méthyle.

**17.** Composition herbicide selon la revendication 1, dans laquelle la composition contient du N-benzyl-2-(4-fluoro-3-trifluorométhylphénoxy)butanamide et du o-[5-(2-chloro-α,α,α-trifluoro-p-tolyloxy)-2-nitrobenzoyl]glycolate d'éthyle en tant qu'ingrédients efficaces.

**18.** Composition herbicide selon la revendication 1, dans laquelle la composition contient du N-benzyl-2-(4-fluoro-3-trifluorométhylphénoxy)butanamide et du 5-(2,4-dichlorophénoxy)-2-nitrobenzoate de méthyle en tant qu'ingrédients efficaces.